# EUROPEAN PATENT APPLICATION

(11) **EP 2 076 002 A1**
(43) Date of publication of application: **01.07.2009**
(21) Application number: 08172535.0
(22) Date of filing: 22.12.2008
(51) Int. Cl.: H04M 1/725

(54) **Apparatus and system for voice service processing and method for audio data processing**

(30) Priority: 28.12.2007 CN 200710307802
(71) Applicant: SHENZHEN HUAWEI MOBILE COMMUNICATION TECHNOLOGY CO., LTD., Guangdong Province 518129 (CN)
(72) Inventor: Ma, Chuanyong, 518129, Shenzhen (CN); Zhong, Zhen, 518129, Shenzhen (CN)
(74) Representative: Thun, Clemens

(57) **Abstract**

A system for voice service processing is provided, which includes: terminal equipment (such as a personal computer), adapted to send a collected audio data and play a received audio data; a wireless terminal, connected to the terminal equipment, and adapted to receive the audio data from the terminal equipment and send the received audio data to an air interface, and adapted to receive an audio data from the air interface and send the received audio data to the personal computer. By using the system and method according to the embodiments of the present invention, the wireless terminal and the terminal equipment arc combined; audio equipment on the terminal equipment is used to provide a voice call function, without designing an earphone interface for the wireless terminal, thereby reducing the cost and complexity of the wireless terminal.

## Description

### CROSS-REFERENCE TO RELATED APPLICATIONS

This application claims priority to Chinese Patent Application No. 200710307802.7, filed on December 28, 2007, entitled "A System, Method and Apparatus for Voice Service Processing", which is incorporated herein by reference in its entirety.

### FIELD OF THE INVENTION

The present invention relates to the field of communication technology, and in particular to apparatus and system for voice service processing and method for audio data processing.

### BACKGROUND

In global system for mobile communication (GSM) and code-division multiple access (CDMA) wireless transmission networks, voice service is mainly realized with a mobile phone as a terminal. With the broadband development of wireless transmission networks, more and more users access to the internet via the wireless transmission networks. Although mobile phones can also access the internet through being connected to a personal computer, they cannot be widely popularized due to some factors, for example, high fees. Therefore, an equipment dedicated for accessing the internet wirelessly, that is, a wireless terminal, such as a wireless modem and a wireless module, has been proposed, which is connected to terminal equipment (TE), such as a personal computer, via a specific interface, so as to realize the networking function.

Generally, the wireless terminal has no keyboard and screen, and has no specific headset and microphone due to being limited by the using manner and being limited in volume. The wireless terminal mainly focuses on the networking function, and weakens the voice function. The interface between the wireless terminal and the terminal equipment may have various forms, such as interface of personal computer memory card international association (PCMCIA), Bluetooth, universal serial bus (USB), peripheral component interconnect (PCI) express, mini PCI express, infrared or 1394 (firewire), so that the communication with the TE is realized via the interface.

During the implementation of the present invention, the inventor has found that, although the wireless terminal mainly aims at achieving the networking data function, it also supports the voice service, and the voice service can be realized in a simple manner by externally connecting the wireless terminal to audio equipment to achieve voice communications with various terminals. However, specific interfaces and circuits are required when the wireless modem is externally connected to audio equipment and a specific pathway, which thus increases the design cost. Furthermore, the portability of the wireless terminal may be influenced when the wireless terminal is externally connected to the audio equipment, and meanwhile, the performance of the antenna for the wireless terminal may be affected as well.

### SUMMARY

The embodiments of the present invention provide a apparatus and system for voice service processing and a method for audio data processing, so as to simplify the design of a wireless terminal, improve the portability of the wireless terminal, and enhance the performance of an antenna.

The embodiments of the present invention provide a system for voice service processing, which includes terminal equipment and a wireless terminal.

The terminal equipment is adapted to collect a voice signal and process the voice signal to obtain a first audio data, and deliver the first audio data; and adapted to receive a second audio data, process and play the processed second audio data.

The wireless terminal is connected to the terminal equipment and adapted to receive and process the first audio data to obtain a processed first audio data, and send the processed first audio data to an air interface; and adapted to receive an audio data from the air interface, process the received audio data to obtain the second audio data, and deliver the second audio data to the terminal equipment.

The embodiments of the present invention provide terminal equipment for voice service processing, which includes a terminal equipment interface, audio equipment and a first processing unit.

The terminal equipment interface is adapted to communicate with a wireless terminal.

The audio equipment is adapted to collect a voice signal and play a second audio data.

The first processing unit is adapted to process the voice signal collected by the audio equipment to obtain a first audio data, and send the first audio data to the terminal equipment interface; and adapted to receive and process an audio data sent by the wireless terminal via the terminal equipment interface to obtain the second audio data, and send the second audio data to the audio equipment.

The embodiments of the present invention provide a wireless terminal for voice service processing, which includes an antenna, a second processing unit and a terminal interface.

The antenna is adapted to communicate with an air interface, and receive an audio data from the air interface or send a processed first audio data to the air interface.

The second processing unit is adapted to process the audio data from the air interface to obtain a second audio data, and process the first audio data to obtain the processed first audio data.

The terminal interface is connected to terminal equipment, and adapted to receive the second audio data delivered by the second processing unit and send the second audio data to the terminal equipment; and adapted to receive the first audio data sent by the terminal equipment and send the first audio data to the second processing unit.

The embodiments of the present invention provide a method for audio data processing, which includes the following steps:

An audio data collected is received by a terminal equipment via an audio equipment;

The received audio data is processed; and

The processed audio data is sent to an air interface.

The above method may further include the following steps:

The audio data is received from the air interface; and

The received audio data is processed, and the processed audio data is sent to the terminal equipment.

The above method may further include the following step: the terminal equipment play the audio data via the audio equipment.

The embodiments of the present invention provide a method for audio data processing, which includes the following steps:

A wireless terminal receives an audio data from an air interface; and

The wireless terminal processes the received audio data and sends the processed audio data to terminal equipment, such as a personal computer.

Compared with the prior art, the present invention has the following advantages.

By combining the wireless terminal with the terminal equipment (such as personal computer), a user can use voice function on the terminal equipment via the audio processing unit and the interface of the wireless terminal.

### BRIEF DESCRIPTION OF THE DRAWINGS

FIG. 1 is a schematic diagram of an application scenario of a voice service processing operation according to embodiments of the present invention;

FIG. 2 is a schematic flow chart of processing voice service according to embodiments of the present invention;

FIG. 3 is a schematic diagram of a system for voice service processing according to a first embodiment of the present invention;

FIG. 4 is a schematic diagram of a method for audio data processing according to a second embodiment of the present invention;

FIG. 5 is a schematic diagram of a method for audio data processing according to a third embodiment of the present invention; and

FIG. 6 is a schematic diagram of a method for audio data processing according to a forth embodiment of the present invention.

### DETAILED DESCRIPTION

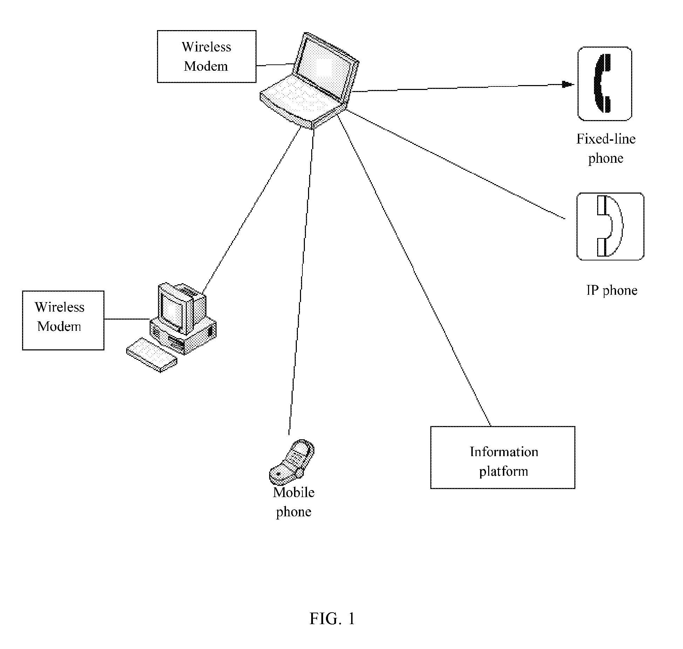

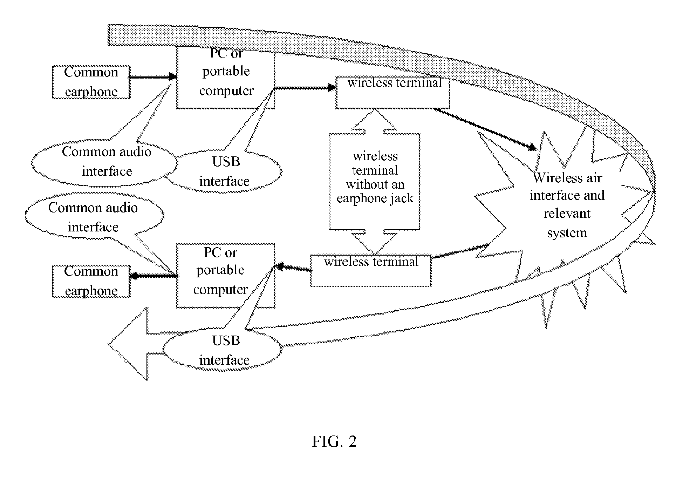

The embodiments of the present invention provide a system and method for voice service processing, which process voice service by combining a wireless terminal, such as a wireless modem and a mobile phone, with terminal equipment. The wireless terminal and the terminal equipment are connected via a specific interface. The wireless terminal could deliver a received audio data to the terminal equipment via the interface, and the received audio data is played via audio equipment of the terminal equipment. Meanwhile, the terminal equipment could collect an audio data via the audio equipment and send the audio data to the wireless terminal via the specific interface. Then, the wireless terminal processes the audio data and sends the processed audio data to other terminals. The wireless network applicable to the embodiments of the present invention not only includes global system for mobile communication (GSM) and code-division multiple access (CDMA) wireless transmission networks, but also includes various standards and evolution versions in the future, such as wideband CDMA (WCDMA), time division-synchronous CDMA (TD-SCDMA), universal mobile telecommunications system (UMTS), high speed downlink packet access (HSDPA), high speed uplink packet access (HSUPA), high-speed packet access (HSPA+), long term evolution (LTE), CDMA-evolution data only (CDMA-EVDO), ultra mobile broadband (UMB), and world interoperability for microwave access (WiMax), and wireless fidelity (WiFi). FIG. 1 is a schematic diagram of an application scenario of a voice service processing operation according to embodiments of the present invention, and FIG. 2 is a flow chart corresponding to FIG. 1.

In order to facilitate the description, hereinafter, a personal computer is taken as an example of the terminal equipment, and those skilled in the art should understand that, the terminal equipment is not limited to a personal computer, but includes other terminal equipment capable of processing voice and data flows in the same manner as the personal computer or in a manner equivalent to the personal computer in the following embodiments, such as gateway equipment, or personal digital assistant (PDA).

The specific implementation manners of the present invention are illustrated below in detail with reference to the drawings and embodiments.

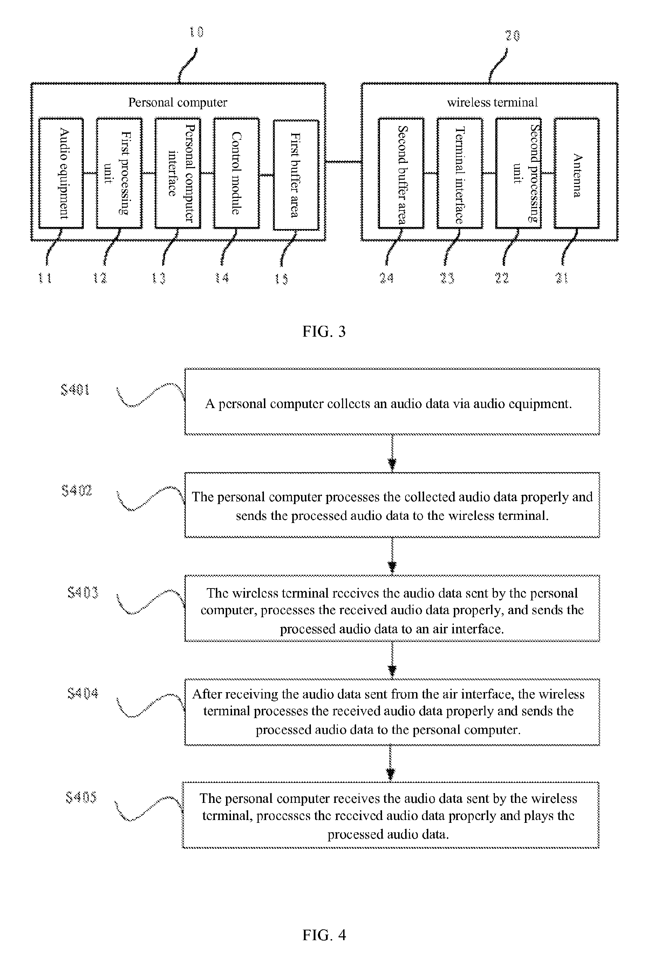

According to a first embodiment of the present invention, a system for voice service processing is provided, as shown in FIG. 3, which includes a personal computer 10 and a wireless terminal 20.

The personal computer 10 is adapted to send a collected audio data, play an audio data received via a USB and play the audio data by invoking a sound card interface via a PC driver.

Herein, the terminal equipment is exemplified by a personal computer, the specific interface between the terminal equipment and the wireless terminal is exemplified by a USB interface, and those skilled in the art should understand that, other terminal equipment may adopt other specific interfaces to receive the audio data, and process and play the audio data in other manners, which is not particularly limited in the present invention.

The wireless terminal 20 is connected to the personal computer 10, and is adapted to receive an audio data from the personal computer 10 and send the received audio data to an air interface; and is adapted to receive and extract an audio data (PCM code stream, one frame per 20 ms) from the air interface, deliver the audio data to the personal computer 10 via USB, and send the audio data to the personal computer 10.

The audio data transmitted between the personal computer 10 and the wireless terminal 20 may be a raw data, and may be a compressed data. Due to the requirements on voice transmission, the data transmission between the personal computer 10 and the wireless terminal 20 requires a Quality of Service (QoS) transmission quality assurance mechanism. If the specific interface between the personal computer 10 and the wireless terminal 20 is a USB interface, a synchronous transfer mode may be adopted to transmit the audio data in real time, so as to ensure the QoS of the data transmission, and alternatively, a general block transfer mode may be adopted. When the block transfer mode is adopted, a receiver may prolong the buffering of the frame. Generally, one voice frame has data bytes for one voice frame (for example, 320 bytes), but each time when it prolongs the buffering for one frame, it increases a delay for one frame interval time (for example, 20 ms).

The personal computer 10 further includes a personal computer interface 13, audio equipment 11, a first processing unit 12 and a control module 14.

The personal computer interface 13 is adapted to communicate with the wireless terminal 20.

As for other terminal equipment, the personal computer interface 13 is a terminal equipment interface adapted to communicate with the wireless terminal 20.

The audio equipment 11 is adapted to send a collected audio data of a user and play a received audio data.

Herein, the audio equipment of the personal computer is taken as an example. However, those skilled in the art should understand that, as for other terminal equipment, the audio equipment could be used to collect a voice signal and play a received audio data.

The first processing unit 12 is adapted to receive and process the audio data sent by the audio equipment 11, and send the processed audio data to the personal computer interface 13; and is adapted to receive and process an audio data from the wireless terminal 20, and send the processed audio data to the audio equipment 11.

The first processing unit 12 processes the voice signal collected by the audio equipment 11 to obtain an audio data, and delivers the audio data to the wireless terminal via the personal computer interface 13.

For example, the first processing unit 12 processes a collected voice analog signal into an audio data that can be transmitted via the personal computer interface 13.

The first processing unit 12 further processes an audio data received from the wireless terminal 20 via the personal computer interface 13, and delivers the processed audio data to the audio equipment for playing.

For example, the first processing unit 12 processes an audio data in a format satisfying the transmission specification of the personal computer interface 13 into an audio data capable of being played by the audio equipment, so that the audio equipment can play the processed audio data.

In order to reduce the burden on the transmission bandwidth, the first processing unit 12 further compresses the received audio data and sends the compressed data to the personal computer interface 13, or receives and decompresses a data in a compressed form sent from the personal computer interface 13 and sends the decompressed data to the audio equipment 11 for playing.

The control module 14 is adapted to control the wireless terminal 20, for example, in dialing a number.

In order to ensure the QoS transmission and the voice quality of the audio data, the personal computer 10 further includes a first buffer area 15 adapted to buffer the received audio data according to the performance for processing an audio data.

The wireless terminal 20 further includes an antenna 21, a second processing unit 22 and a terminal interface 23.

The antenna 21 is adapted to communicate with an air interface, and send an audio data from the air interface to the second processing unit 22 or send an audio data from the second processing unit 22 to the air interface.

The second processing unit 22 is adapted to process a received audio data.

The second processing unit 22 receives and processes an audio data from the antenna 21, and delivers the processed audio data to the terminal interface 23.

For example, the second processing unit 22 processes an audio data in a format satisfying the air interface specification from the antenna 21 into an audio data capable of being transmitted via the terminal interface 23.

The second processing unit 22 receives and processes an audio data from the terminal interface 23, and delivers the processed audio data to the antenna 21.

For example, the second processing unit 22 processes an audio data capable of being transmitted via the terminal interface 23 from the terminal interface 23 into an audio data satisfying the air interface specification.

If an audio data sent by the personal computer 10 is a compressed audio data, the second processing unit 22 further decompresses the compressed audio data and sends the decompressed audio data to the air interface, or compresses an audio data received from the air interface and sends the compressed audio data to the personal computer 10.

The terminal interface 23 is connected to the personal computer 10, and is adapted to receive an audio data sent by the second processing unit 22 and send the audio data to the personal computer 10, or is adapted to receive an audio data sent by the personal computer 10 and send the audio data to the second processing unit 22. The terminal interface 23 may be, for example, USB interface, Bluetooth interface, PCMCIA interface, Express PCMCIA interface, infrared interface or 1394 interface and so on.

In order to ensure the QoS transmission and the voice quality of the audio data, the wireless terminal 20 further includes a second buffer area 24 which is adapted to buffer a received audio data according to a performance for processing an audio data. After the terminal interface 23 receives the audio data, the size of the second buffer area 24 is adjusted according to an audio data processing rate.

Through the system in the above embodiments, the voice service is realized by combining the wireless terminal with the terminal equipment, so that universal audio equipment provided by the terminal equipment can be utilized, without designing an earphone interface dedicated for the wireless terminal, thereby reducing the cost and complexity of the wireless terminal.

A method for audio data processing according to a second embodiment of the present invention is shown in FIG. 4, which includes the following steps.

In Step S401, a personal computer collects an audio data via audio equipment. The audio equipment is adapted to send the collected audio data to a wireless terminal and play an audio data received from the wireless terminal.

Particularly, the audio data is preferably collected by the personal computer in real time, so as to ensure that the data is delivered in real time.

In Step S402, the personal computer processes the collected audio data properly and sends the processed audio data to the wireless terminal. For example, the data transmitted to the wireless terminal by the personal computer may be a raw data, or may be a compressed data.

In Step S403, the wireless terminal receives the audio data sent by the personal computer, processes the received audio data properly, and sends the processed audio data to an air interface. The wireless terminal receives a voice signal sent by the personal computer via USB interface, Bluetooth interface, PCMCIA interface, PCI express interface, mini PCI express interface, infrared interface or 1394 interface and so on.

Particularly, after the wireless terminal receives the audio data, it may buffer less audio data according to the processing performances of the wireless terminal and the personal computer, or may remove the buffer area to ensure the real time property of the data. If the received audio data is a compressed data, the wireless terminal needs to decompress the received data and then sends the decompressed data to the air interface.

In Step S404, after receiving audio data sent from the air interface, the wireless terminal processes the received audio data properly and sends the processed audio data to the personal computer.

Particularly, the wireless terminal may directly send the received data to the personal computer, or may compress the received data and then send the compressed data to the personal computer.

In Step S405, the personal computer receives the audio data sent by the wireless terminal, and invokes a sound card interface via a PC driver to play the audio data. If the wireless terminal compresses the audio data received from the air interface before sending the audio data to the personal computer, the personal computer needs to decompress the audio data before playing.

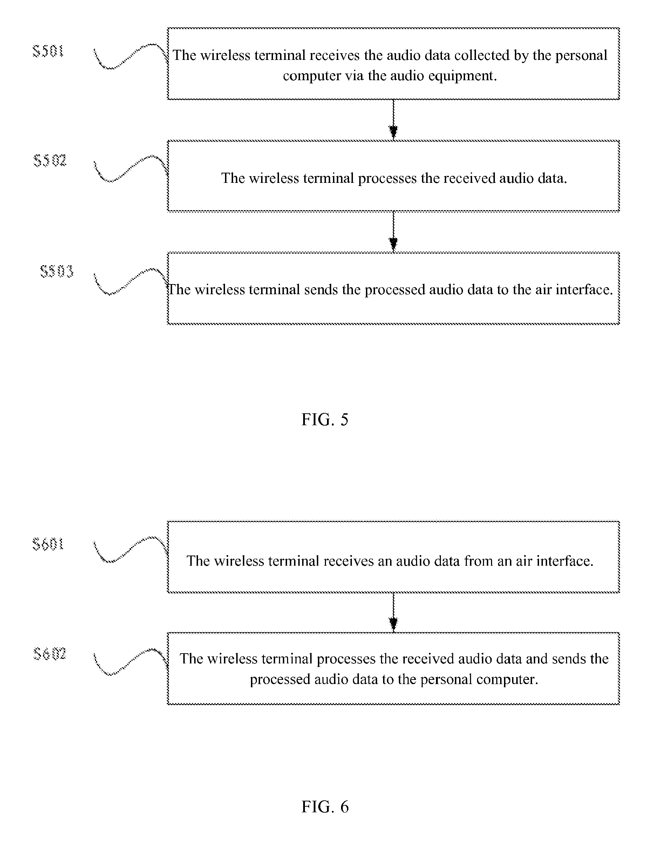

In a third embodiment of the present invention, a method for audio data processing is provided, as shown in FIG. 5, which includes the following steps.

In Step S501, the wireless terminal receives the audio data collected by the personal computer via the audio equipment. Particularly, the wireless terminal communicates with the personal computer via the personal computer interface, and receives the audio data collected by the personal computer.

In Step S502, the wireless terminal processes the received audio data. Particularly, after the wireless terminal receives the audio data, it may buffer less audio data according to the processing performances of the wireless terminal and the personal computer, or may remove the buffer area to ensure the real time property of the data. If the received audio data is a compressed data, the wireless terminal needs to decompress the received data.

In Step S503, the wireless terminal sends the processed audio data to the air interface.

In a fourth embodiment of the present invention, a method for audio data processing is provided, as shown in FIG. 6, which includes the following steps.

In Step S601, the wireless terminal receives an audio data from an air interface.

In Step S602, the wireless terminal processes the received audio data and sends the processed audio data to the personal computer. Particularly, the wireless terminal may directly send the received data to the personal computer, or may compress the received data and then send the compressed data to the personal computer.

The embodiments of the present invention may also be applicable to video telephones, in which the video data is delivered to a PC in the same principle. As for the image part, the function of the sound card is replaced by a graphics card, and the function of a microphone (MIC) is replaced by a camera.

Through the methods in the above embodiments, voice service is realized by combining the wireless terminal with the terminal equipment, and universal portable audio equipment provided by the terminal equipment may be utilized, so as to reduce the inconveniences caused by missing of the earphone, thereby realizing the hands-free function. Furthermore, it is not necessary to design an earphone interface for the wireless terminal, thereby reducing the cost and complexity of the wireless terminal.

Through the above descriptions of the implementation manners, those skilled in the art can clearly understand that, the present invention is realized through combining software with a necessary universal hardware platform, which definitely can be realized via hardware, but in most cases, the former manner is preferred. Based on such understanding, the technical solutions of the present invention or parts of the technical solutions of the present invention making contributions to the prior art are substantially presented in the form of a software product. The obtained software product is stored in a storage medium, which includes a plurality of instructions for enabling terminal equipment to execute the methods according to the embodiments of the present invention.

The above embodiments are merely intended to describe the technical solutions of the present invention, but not to limit the scope of present invention. It will be apparent to those skilled in the art that various modifications and variations can be made to the structure of the present invention without departing from the scope of the invention.

## Claims

1. A terminal equipment for voice service processing, comprising:
a terminal equipment interface, adapted to communicate with a wireless terminal;
audio equipment, adapted to collect a voice signal and play a second audio data; and
a first processing unit, adapted to process the voice signal collected by the audio equipment to obtain a first audio data, and send the first audio data to the terminal equipment interface; and adapted to receive and process an audio data sent by the wireless terminal via the terminal equipment interface to obtain the second audio data, and send the second audio data to the audio equipment.

2. The terminal equipment according to claim 1, further comprising:
a control module, adapted to control the wireless terminal.

3. The terminal equipment according to claim 1, further comprising:
a first buffer area, adapted to buffer the received audio data according to a performance for processing an audio data.

4. The terminal equipment according to claim 1, wherein the terminal interface is any one selected from a group consisting of universal serial bus (USB) interface, Bluetooth interface, personal computer memory card international association (PCMCIA) interface, mini-express PCMCIA interface, infrared interface and firewire 1394 interface.

5. The terminal equipment according to any one of claims 1 to 4, wherein the terminal equipment is a personal computer.

6. A wireless terminal for voice service processing, comprising:
an antenna, adapted to communicate with an air interface, and receive an audio data from the air interface or send a processed first audio data to the air interface;
a second processing unit, adapted to process the audio data from the air interface to obtain a second audio data, and process the first audio data to obtain the processed first audio data; and
a terminal interface, connected to terminal equipment, and adapted to receive the second audio data delivered by the second processing unit, and send the second audio data to the terminal equipment; and adapted to receive the first audio data sent by the terminal equipment and send the first audio data to the second processing unit.

7. The wireless terminal according to claim 6, further comprising:
a second buffer area, adapted to buffer the received audio data according to the performance for processing an audio data.

8. A system for voice service processing comprising a terminal equipment according to any one of claims 1-5 and a wireless terminal according to any one of claims 6-7.

9. A method for audio data processing, comprising:
receiving, an audio data collected by a terminal equipment via an audio equipment;
processing, the received audio data; and
sending, the processed audio data to an air interface.

10. The method for audio data processing according to claim 9, further comprises:
buffering the received audio data according to a performance for processing an audio data.

11. The method for audio data processing according to claim 9, wherein the receiving, the audio data collected by the terminal equipment via the audio equipment further comprises:
communicating, with the terminal equipment via a terminal equipment interface; and
receiving, the audio data collected by the terminal equipment via the audio equipment and delivered by the terminal equipment via the terminal equipment interface.

12. The method for audio data processing according to claim 9, further comprising: the terminal equipment processing the audio data and sending.

13. The method for audio data processing according to claim 9, wherein the sending, the processed audio data to the air interface further comprises:
communicating, with the air interface via an antenna; and
sending the audio data from the terminal equipment to the air interface via the antenna.

14. The method for audio data processing according to claim 9 further comprising:
receiving, the audio data from the air interface; and
processing, the received audio data and sending the processed audio data to the terminal equipment.

15. The method for audio data processing according to claim 14, further comprising:
playing, by the terminal equipment, the audio data via the audio equipment.
